Europäisches Patentamt

European Patent Office

Office européen des brevets

(19)

(11) Veröffentlichungsnummer : **0 095 116 B1**

(12) **EUROPÄISCHE PATENTSCHRIFT**

(45) Veröffentlichungstag der Patentschrift :
21.01.87

(21) Anmeldenummer : 83104786.5

(22) Anmeldetag : 16.05.83

(51) Int. Cl.⁴ : **C 08 G 18/66, C 08 L 71/02**

(54) **Einphasig lagerstabile Polyolkompositionen mit hohem Ethylenglykol-Anteil und ihre Verwendung zur Herstellung von Polyurethanen.**

(30) Priorität : 26.05.82 DE 3219759

(43) Veröffentlichungstag der Anmeldung :
30.11.83 Patentblatt 83/48

(45) Bekanntmachung des Hinweises auf die Patenterteilung : 21.01.87 Patentblatt 87/04

(84) Benannte Vertragsstaaten :
**BE DE FR GB IT NL**

(56) Entgegenhaltungen :
EP-A- 0 051 195
EP-A- 0 069 287
DE-A- 2 117 975
DE-B- 2 759 398
US-D- 3 993 576

(73) Patentinhaber : BAYER AG
Konzernverwaltung RP Patentabteilung
D-5090 Leverkusen 1 Bayerwerk (DE)

(72) Erfinder : Heusch, Rudolf, Dr.
Paul-Kleestrasse 85
D-5090 Leverkusen (DE)
Erfinder : Rasshofer, Werner, Dr.
Wolfskaul 10
D-5000 Köln 80 (DE)
Erfinder : Reichmann, Wolfgang, Dr.
Kölner-Strasse 48
D-4010 Hilden (DE)
Erfinder : Richartz, Adolf, Dr.
Georgstrasse 41
D-5000 Köln 80 (DE)

EP 0 095 116 B1

Jouve, 18, rue St-Denis, 75001 Paris, France

## Beschreibung

Die Erfindung betrifft neue, homogen lagerstabile, emulgatorfreie Polyolgemische mit hoher Misch-OH-Zahl und hohem Ethylenglykolgehalt aus höhermolekularen Polyoxyalkylenpolyolen der OH-Zahl 20 bis 210 mit mindestens 5 Gew.-% überwiegend oder ausschließlich endständigen Oxyethylenblöcken, in Abmischung mit Umsetzungsprodukten von Ethylenglykol und 0,1 bis 0,5 Mol Propylenoxid. Weiterer Erfindungsgegenstand ist die Verwendung dieser Polyolgemische zur Herstellung von Polyurethanen.

Es ist aus der DE-B-1 770 703 bekannt, zur Herstellung von Polyurethanen Gemische von miteinander unverträglichen Polyolen einzusetzen. Auf diese Weise sind Endprodukte mit verbessertem Eigenschaftsniveau wie beispielsweise guter Wärmebeständigkeit und hoher Schlagzähigkeit zugänglich.

Dieses Prinzip der Polyurethanherstellung unter Verwendung von unverträglichen Polyolgemischen eignet sich gemäß der DE-A-2 309 861 auch zur Herstellung von Schaumstoff-Formkörpern mit kompakter Oberfläche.

Die Verwendung einer Mischung unverträglicher Polyole hat jedoch eine Reihe lager- und verarbeitungstechnischer Nachteile. Bereits eine kurzfristige Lagerhaltung, d. h. einige Stunden bis 3 Tage, derartiger gut durchgemischter Polyolsysteme bedingt die Auftrennung des Gemisches in 2 Phasen, so daß vor jedem Abfüllen die Polyolmischungen wieder sehr intensiv durchmischt werden bzw. ständig gemischt oder im Kreislauf gefahren werden müssen, um zu gewährleisten, daß das Mischungsverhältnis der Komponenten erhalten bleibt.

Es sind verschiedene Wege bekannt geworden, solche Mischungen phasenstabil einzustellen.

Das Absetzen der Phasen kann z. B. gemäß der Lehre der US-PS-3 945 393 durch den Zusatz von kolloidaler Kieselsäure oder eines mit einer Oniumverbindung modifizierten Tons erfolgen. Ähnlich lehrt die DE-A-2 341 294 die Mitverwendung von inerten, oberflächenaktiven Materialien, die eine spez. Oberfläche von 10-800 m²/g aufweisen, wie Kieselsäureagglomerat und/oder ein Chrysotil-Asbest und/oder ein in seinem mineralischen Aufbau Chrysotil-Asbest entsprechendes anorganisches Material.

Eine andere Möglichkeit, mehrere miteinander unverträgliche Polyole zu homogenisieren, besteht in der Mitverwendung von flüssigen und/oder löslichen Lösungsvermittlern.

So werden gemäß US-PS-4 141 852 Gemische aus monomeren Polyolen mit einer Molmasse < 500 und Polyetherpolyolen mit einer Molmasse von 1 800-7 000 dadurch vor der Separation bewahrt, daß sogenannte Pfropfpolypropylenetherglykole der Molmasse 1 500-3 500 mitverwendet werden. Eine stabile Emulsion aus einem hochmolekularen Polyol und Ethylenglykol oder Butandiol-1,4 wird gemäß US-PS-4 273 884 dadurch hergestellt, daß ein Ethylenoxid/Propylenoxid-Copolymer (Molmasse ≥ 12 000) mitverwendet wird.

In der DE-B-2 759 398 werden Mischungen aus Poly(oxypropylen/oxyethylen)-polyolen (OH-Zahl 20-60) mit bestimmten Oxyethylen-Gehalten und Ethylenglykol oder Butandiol beschrieben.

In der US-Anmeldung US-B-471 405 (& US-A-3 993 576) werden Gemische aus hochmolekularen Polyoxyalkylenpolyolen mit OH-Äquivalentgewichten von 650-3 000 und z. B. Ethylenglykol dadurch vor der Entmischung bewahrt, daß Verbindungen wie 1,2-Butylenglykol, Di-(1,2-butylenglykol), Di-(1,2-propylenglykol), Tri-(1,2-propylenglykol) oder Addukte von 2 Mol 1,2-Butylenoxid an 1 Mol Ethylenglykol mitverwendet werden.

Weiterhin ist es jedem Fachmann bekannt, daß zweiphasige Gemische aus miteinander unverträglichen Polyolen auch durch Zugabe geringer Mengen an Emulgatoren wie z. B. langkettiger Benzolalkylsulfonate etc. einphasig eingestellt werden können. Alle diese Lehren gemäß des Standes der Technik können nicht voll befriedigen. So kann die Verwendung von Feststoffen als Emulsionsstabilisatoren die Abrasion von Mischeinrichtungen bewirken, auch läßt die Stabilisierungswirkung im allgemeinen nach einigen Tagen schon stark nach. Außerdem werden neuerdings gegen asbestöse Materialien physiologische Bedenken ins Feld geführt. Zu berücksichtigen ist bei der Verwendung solcher oberflächenaktiven Substanzen deren katalytische Eigenaktivität, insbesondere bei Beladung mit Onium-Verbindungen.

Die Mitverwendung von sog. « Pfropfpolyolen », wie sie die US-PS-4 141 852 vorschlägt, hat den Nachteil, daß solche « Pfropfpolyole » gegenüber den Polyolen teuer sind und so die Wirtschaftlichkeit des Verfahrens beeinträchtigen.

Die Lehre der US-PS-4 273 884 vermag ebenfalls nicht die Wünsche nach einem einphasig lagerstabilen Polyolgemisch zu befriedigen. Die herstellbaren Emulsionen zeigen nämlich schon, zumindest teilweise, innerhalb der ersten 6-8 Wochen Separation der Phasen. Die obige Patentschrift beschreibt im übrigen, daß « ziemlich stabile » Emulsionen erhalten werden.

Die Mitverwendung von Di- und Tripropylenglykol vermag zwar, wie in der US-PS-B 471 405 gelehrt wird, solche einphasig stabilen Polyolmischungen zu erzeugen, doch ist es jedem Fachmann bekannt, daß die Mitverwendung dieser Verbindungen zu einem scharfen Abfall der mechanischen Werte daraus hergestellter Polyurethankunststoffteile führt, insbesondere leidet die Wärmeformbeständigkeit.

Die Verwendung üblicher Emulgatoren zur Einphaseneinstellung leidet an einer Reihe von Nachteilen : Die Emulgatoren können mit der Zeit aus der Polyolmischung kristallin ausfallen oder sich z. B. an der Oberfläche anreichern, sie können die katalytische Systembalance in unkontrollierbarer Weise verändern, sie können weiterhin aus dem fertigen Polyurethanformteil ausschwitzen und damit dessen Gebrauchseigenschaften drastisch mindern.

Es besteht also weiterhin ein dringendes technisches Interesse an für einen genügend langen Zeitraum (mindestens ca. 6 Monate) völlig lagerstabilen Polyolformulierungen, die optisch klar sind, keine weiteren festen oder flüssigen Zusätze, die ausfallen oder sich anderweitig separieren oder verändern oder in Reaktion treten können, enthalten, eine hohe Misch-OH-Zahl haben und einen hohen Anteil an Ethylenglykol aufweisen.

Überraschenderweise wurde gefunden, daß Gemische aus nachstehend näher bezeichneten Polyolen und nachstehend näher bezeichneten Ethylenglykol/Propylenoxid-Umsetzungsprodukten einphasig lagerstabil und optisch völlig klar sind und einen hohen Anteil an Ethylenglykol aufweisen, ohne daß gleichzeitig der Gehalt an (an sich unerwünschten, vor allem höheren) Propoxylierungsprodukten des Ethylenglykols zu hoch wird.

Gegenstand der vorliegenden Erfindung ist ein einphasig lagerstabiles, emulgatorfreies Polyolgemisch mit hoher Misch-OH-Zahl und hohem Ethylenglykolgehalt aus

A) einem höhermolekularen Polyoxyalkylenpolyol und
B) einem Gemisch niedermolekularer Diole und gegebenenfalls
C) weiteren, an sich bekannten Verbindungen mit gegenüber Isocyanaten reaktionsfähigen Wasserstoffatomen und gegebenenfalls
D) weiteren Hilfs- und Zusatzstoffen der Polyurethanherstellung,

dadurch gekennzeichnet, daß man

als Komponente A) ein Polyoxyalkylenpolyol der OH-Zahl 20-210, das mindestens 5 Gew.-% und weniger als 80 Gew.-%, überwiegend oder ausschließlich endständige Oxyethylenblöcke besitzt und

als Komponente B) ein niedermolekulares Diolgemisch der OH-Zahl 1 200-1 650 in Form eines Umsetzungsproduktes von 1 mol Ethylenglykol mit 0,1-0,5 mol Propylenoxid und gegebenenfalls

als Komponente C) 2- und/oder 3-wertige Verbindungen mit reaktionsfähigen Wasserstoffatomen und einer Molmasse von 32-399 verwendet, wobei im Polyolgemisch auf

100 Teile A)
0,1 bis 30 Teile B) und gegebenenfalls bis
5 Teile C) kommen.

Bevorzugt werden solche Polyolgemische verwendet, welche als Komponente A) Polyoxyalkylenpolyole mit überwiegend endständigen Oxyethylenoxidblöcken in Mengen von 10 bis 50 Gew.-%, besonders bevorzugt von 12,5 bis 27,5 Gew.-%, aufweisen. Als Polyoxyalkylenpolyole sind dabei Polyoxypropylenpolyole mit einem Gehalt von 12,5 bis 27,5 Gew.-% an überwiegend endständigen Oxyethylenblöcken besonders bevorzugt. Die Polyoxyalkylenpolyole sind insbesondere 2- bis 4-wertige Polyole der gekennzeichneten Art mit einer OH-Zahl von 20 bis 60.

Gegenstand der Erfindung ist ferner die Verwendung dieser einphasig lagerstabilen, emulgatorfreien Polyolgemische als Reaktionskomponente bei der Herstellung von Polyurethanen.

Die lagerstabilen, einphasigen und emulgatorfreien Polyolgemische der Erfindung zeigen weiterhin folgende Vorteile, wobei gleichzeitig oben aufgeführte Nachteile des Standes der Technik vermieden werden : Bei der Herstellung von Polyurethan-Integralschaumstoffen wird eine qualitative Verbesserung beobachtet, d. h. die nicht-zellige Haut ist dicker, frei von sog. « pin holes » und anderen Oberflächenstörungen und die Pu-Integralschaumteile weisen insgesamt weniger « Abbläser » d. h. unregelmäßige Krater, auf.

Bei der Herstellung von Polyurethan-Integralschaumstoffen werden, insbesondere bei harten Ausführungen, ein oder mehrere sog. Zellstabilisatoren, z. B. auf Basis von Polysiloxan-Polyalkylenoxid-Copolymeren, eingesetzt. Bei der Verwendung der erfindungsgemäßen Polyolgemische kann in vielen Fällen ganz oder teilweise auf die Verwendung solcher Stabilisatoren verzichtet werden.

Bei geeigneter Vorgehensweise können auch sog. warmverformbare PU-Integralschaumstoffe hergestellt werden. Die Polyurethane weisen dabei insgesamt eine verbesserte Wärmestandfestigkeit auf.

Dadurch, daß auf andere Mittel zur Herstellung von Einphasigkeit, z. B. ionische oder nicht neutrale Emulgatoren, verzichtet werden kann, können Zusätze verabreicht werden, die sonst mit den z. B. ionischen oder nicht neutralen Zusätzen reagieren würden.

Überraschenderweise hat sich gezeigt, daß nur ganz bestimmte Polyetherpolyole zusammen mit den erfindungsgemäß zu verwendenden Ethylenglykol/Propylenoxid-Addukten eine besonders hohe Misch-OH-Zahl mit relativ hohem Ethylenglykolgehalt und relativ niedrigem Gehalt an Alkoxylierungsprodukten des Ethylenglykols im Polyolgemisch bei gleichzeitiger Einphasigkeit des Polyolgemischs ergeben.

Die als Komponente A) einzusetzenden Polyetherpolyole sind lineare oder verzweigte di-, tri-, tetra- oder höherfunktionelle Polyoxyalkylenpolyole, die eine OH-Zahl von 20 bis 210, vorzugsweise 20 bis 120 und besonders bevorzugt 20 bis 60 aufweisen, die mindestens 5 Gew.-% und weniger als 80 Gew.-% überwiegend oder ausschließlich an den Kettenenden befindliche Polyethylenoxidblöcke besitzen.

Besonders bevorzugt sind solche Polyalkylenoxidpolyole die überwiegend oder ausschießlich endständige Ethylenoxidblöcke von 10 bis 50 Gew.-%, bezogen auf die Summe aller im Polyalkylenoxidpolyol vorhandenen Alkylenoxideinheiten, ausmachen. Besonders bevorzugt sind solche Polyoxyalkylenpolyolen, welche 12,5 bis 27,5 Gew.-% überwiegend oder ausschließlich endständige Ethylenoxidblöcke besitzen. Die Polyoxyalkylenpolyole sind dabei bevorzugt di-, tri- oder tetrafunktionell, besonders bevorzugt sind di- bis trifunktionelle Polyoxyalkylenpolyole der genannten OH-Zahlbereiche. Die technisch wichtigsten Polyoxyalkylenpolyole sind dabei die Polyoxypropylenpolyole mit 10 bis 50 Gew.-%, bevorzugt 12,5 bis 27,5 Gew.-% an überwiegend oder ausschließlich endständigen Oxyethylenblöcken und einer Funktionalität von 2 bis 3.

Die höhermolekularen Polyoxyalkylenpolyole mit überwiegend endständigen Oxyethylenoxidsequenzen (d. h. auch endständig überwiegend primären OH-Gruppen) werden nach den üblichen Verfahren hergestellt. So werden diese Polyole durch Polymerisation von Alkylenoxiden wie Ethylenoxid, Propylenoxid, 1,2- oder 2,3-Butylenoxid, Tetrahydrofuran, Styroloxid und/oder Epichlorhydrin durch Anlagerung an Startkomponenten mit reaktionsfähigen Wasserstoffatomen wie Wasser, Polyole, Ammoniak oder Amine bzw. Polyamine oder Aminoalkohole, z. B. Ethylenglykol, Propandiol-1,2 oder -1,3, Dipropylenglykol, Trimethylolpropan, Glycerin, Pentaerythrit, Sorbit, Sucrose, 4,4'-Dihydroxy-diphenylpropan, Anilin, Ethanolamin oder Ethylendiamin, gegebenenfalls in Gegenwart von sauren oder vorzugsweise basischen Katalysatoren hergestellt. Die Polymerisation erfolgt dabei im Gemisch mit Ethylenoxid, vorzugsweise aber in stufenweiser Reaktion mit der Anlagerung von Ethylenoxid in der Endstufe.

Besonders bevorzugt sind Polyoxypropylenpolyetherpolyole mit endständigen oder überwiegend endständigen Oxyethylensequenzen und primären Hydroxylgruppen. Die Oxyethylensequenzen bzw. -blöcke können z. T. im Inneren der Polyether vorliegen, müssen aber zum überwiegenden Teil endständig angeordnet sein.

Herstellung und Eigenschaften solcher Polyether sind in Ullmanns Enzyklopädie der Technischen Chemie, Verlag Chemie, Weinheim, 4. Auflage, Band 19 (1981) im Kapitel Polyoxyalkylenglykole (S. 31-38) und im Kapitel Polyurethane (S. 301-341, bes S. 304-308) beschrieben und werden auch im Kunststoff-Handbuch, Band VII, Polyurethane, Carl Hanser Verlag, München, 1966 auf S. 61-75 abgehandelt.

Die Polyolkomponente B) stellt für sich ein Gemisch dar, wie es durch an sich bekannte Umsetzung von Ethylenglykol mit Propylenoxid entsteht. Erfindungsgemäß werden dabei 0,1-0,5 mol, bevorzugt 0,2-0,4 mol, Propylenoxid auf 1 mol Ethylenglykol eingesetzt.

Komponente (B) weist eine Zusammensetzung in den Grenzen von

a) mindestens 40 Gew.-% Ethylenglykol (vorzugsweise mindestens 54 Gew.-%)
b) 20-50 Gew.-% monopropoxyliertem Ethylenglykol (vorzugsweise 20-40 Gew.-%)
c) 0-10 Gew.-% zweifach propoxyliertem Ethylenglykol (vorzugsweise 0-5 Gew-%)
d) 0-2 Gew.% höher propoxyliertem Ethylenglykol (vorzugsweise 0-1 Gew.-%),

wobei die Summe a) + b) + c) + d) = 100 Gew.-% ist, auf.

Die Propoxylierung des Ethylenglykols kann basisch (z. B. mit Alkalihydroxiden) oder sauer (z. B. mit $BF_3$-Etherat) katalysiert werden, vorzugsweise wird sie mit KOH katalysiert. Der Katalysator wird nach Beendigung der Reaktion neutralisiert oder absorbiert und aus dem Propoxylierungsprodukt nach an sich bekannten Methoden entfernt.

Gegebenenfalls als weitere Ausgangskomponente C) geeignet sind Verbindungen mit mindestens zwei gegenüber Isocyanaten reaktionsfähigen Wasserstoffatomen (« reaktiven H-Atomen ») und einem Molmassenbereich von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder aromatische Aminogruppen aufweisende Verbindungen, die als Kettenverlängerungsmittel oder Vernetzungsmittel dienen. Diese Verbindungen weisen in der Regel = 2, vorzugsweise 2 und/oder 3, gegenüber Isocyanaten reaktionsfähige Wasserstoffatome auf. Sie werden nur in solchen Mengen eingesetzt, daß jeweils die Einphasigkeit des erfindungsgemäßen Polyolgemisches gewahrt bleibt. Auch in diesem Fall können Mischungen von verschiedenen Verbindungen mit mindestens 2 gegenüber Isocyanaten reaktionsfähigen Wasserstoffatomen mit einem Molmassenbereich von 32 bis 399 verwendet werden.

Als Beispiele für derartige Verbindungen seien genannt : Propandiol-(1,2) und -(1,3), Butandiol-(1,4) und -(2,3), Pentandiol-(1,5), Hexandiol-(1,6), Octandiol-(1,8), Neopentylglykol, 1,4-Bis-hydroxymethylcyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Ricinusöl, Di-, Tri-, Tetra- und höhere Polyethylenglykole mit Molmassen bis 399, Di-, Tri-, Tetra- und höhere Polypropylenglykole mit Molmassen bis 399, Di-, Tri- und höhere Polybutylenglykole mit Molmassen bis 399, 4,4'-Dihydroxy-diphenylpropan, Di-hydroxymethyl-hydrochinon, Ethanolamin, Diethanolamin, Diisopropanolamin, N-Methyldiethanolamin, Triethanolamin und 3-Aminopropanol, sowie Dimethylolpropionsäure. Als niedermolekulare Polyole können auch die Gemische von Hydroxyaldehyden und Hydroxyketonen (« Formose ») bzw. ihre reduzierten Derivate (« Formite ») eingesetzt werden.

Bevorzugt sind 2- und/oder 3-wertige Polyole, besonders die unverzweigten aliphatischen Diole mit bis zu 8 C-Atomen, wie Butandiol-1,4 und/oder Hexandiol-1,6.

Als Polyamine werden zumeist aromatische Diamine der Art, wie sie in DE-OS-2 854 384 aufgeführt sind, z. B. 4,4'-Diamino-diphenylmethan, verwendet.

Bevorzugt sind relativ niedrig schmelzende, relativ gut lösliche aromatische kernalkylierte Diamine wie Kerndialkylierte Toluylen-2,4- bzw. -2,6-diamine wie 3,5-Diethyl-toluylen-2,4-diamin und/oder 3,5-Diethyl-toluylen-2,6-diamin, 4-Alkyl-3,5-diamino-benzoesäure-isobutylester, sowie Di- Tri- oder Tetra-$C_1$-$C_4$-alkyl-diphenylmethan-4,4'-diamine, gegebenenfalls mit unterschiedlichen Alkylsubstituenten in den verschiedenen Kernen.

Aliphatische Diamine, z. B. Ethylendiamin, Hexan-1,6-diamin sind weniger bevorzugt, können jedoch in Form ihrer weniger reaktiven Aldimin- oder Ketiminderivate besser eingesetzt werden (vgl. US-PS-3 734 894/DE-OS-2 637 115).

Als übliche Hilfs- und Zusatzmittel D) können Katalysatoren der bekannten Art, z. B. tertiäre Amine wie Dimethylbenzylamin, 1,4-Diaza-bicyclo-(2,2,2)-octan oder Triethanolamin, monocyclische oder bicyclische Amidine, Bis-dialkylaminoalkyl-ether oder Amidgruppen aufweisende tertiäre Amine in Frage kommen.

Auch basische Katalysatoren wie Alkalihydroxide, Alkaliphenolate oder Alkalialkoholate, ferner organische Metallverbindungen, insbesondere organische Blei- und Zinnverbindungen, können eingesetzt werden, z. B. Dibutylzinndilaurat, oder deren Gemische.

Es können jedoch auch Reaktionsverzögerer für die Isocyanatreaktion, z. B. sauer reagierende Stoffe, wie Salzsäure oder organische Säurehalogenide, Borsäure oder Schwefeldioxid, ferner Zellregler für Schaumstoffe der an sich bekannten Art, wie Paraffine oder Fettalkohole, oder auch Dimethylpolysiloxane, sowie Pigmente und/oder Farbstoffe sowie Flammschutzmittel der an sich bekannten Art, ferner Stabilisatoren gegen Licht-, Alterungs- und Witterungseinflüsse, Weichmacher und fungistatisch und bakteriostatisch wirkende Substanzen zugegeben werden. Weitere Beispiele dieser Zusatzmittel sind im Kunststoff-Handbuch, Band 7, herausgegeben von Vieweg & Höchtlen, Carl Hanser Verlag, München 1966, auf den Seiten 96-113, Treibmittel zur Herstellung von Polyurethanschaumstoffen auf den Seiten 453-455 und 507-510 beschrieben.

Zur Herstellung von Polyurethanen wird die erfindungsgemäße Polyolmischung als alleinige oder anteilige Reaktionskomponente mit OH-Gruppen zusammen mit Polyisocyanaten und gegebenenfalls weiteren Hilfs- und Zusatzstoffen wie Treibmitteln, Zellreglern, Katalysatoren, farbgebenden Stoffen, Füllstoffen und/oder Fasern verwendet.

Neben der erfindungsgemäßen Polyolmischung können zur Polyurethanbildung weitere höhermolekulare Polyole mit Molmassen zwischen 400 und 10 000, bevorzugt 450 und 6 000, in Form der aus der Polyurethanchemie an sich bekannten, vorzugsweise 2, gegebenenfalls auch mehr, aktive Wasserstoffatome (im wesentlichen Hydroxylgruppen) enthaltende Polyester, Polylactone, Polycarbonate, Polyether, Polythioether, Polyester, Polyacetale, Vinylpolymere, wie z. B. Polybutadienöle, bereits Urethan- oder Harnstoffgruppen enthaltende Polyhydroxylverbindungen sowie gegebenenfalls modifizierte natürliche Polyole, bzw. auch andere Zerewitinoff-aktive Gruppen wie Amino-, Carboxyl- oder Thiolgruppen enthaltende Verbindungen eingesetzt werden. Diese Verbindungen entsprechen dem Stand der Technik und sind z. B. in den DE-A-2 302 564, 2 423 764 und 2 549 372 (US-PS-3 963 679), den DE-A-2 402 799, 2 431 846, 2 402 840 (US-PS-3 984 607), der DE-B-2 457 387 (US-PS-4 035 213) sowie besonders in der DE-A-2 854 384 beschrieben.

Erfindungsgemäß bevorzugt sind Hydroxylgruppen-haltige Polyester (z. B. aus Glykolen und Adipinsäure, Phthal-, Isophthal- und/oder Terephthalsäure sowie deren Hydrierungsprodukten), Hydroxypolycarbonate, -Polycaprolactone, sowie insbesondere 2 bis 8, vorzugsweise 2 bis 4 OH-Gruppen aufweisende Polyether, (Polyoxyalkylenpolyole oder Polyalkylenoxidpolyole), die durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propandiol-(1,3) oder -(1,2), Trimethylolpropan, Glyzerin, Sorbit, 4,4'-Dihydroxy-diphenylpropan, Anilin, Ethanolamin oder Ethylendiamin hergestellt werden. Auch Sucrosepolyether sowie auf Formit oder Formose gestartete Polyether kommen erfindungsgemäß in Frage.

Es können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den o. g., Hydroxylgruppen aufweisenden Verbindungen ablaufen läßt (vgl. z. B. DE-A-2 324 134 oder 2 639 254). Es ist aber auch möglich, gemäß US-Patentschrift 3 869 413 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyethern (US-Patentschriften 3 383 351, 3 304 273, 3 523 093, 3 110 695 ; DE-Auslegeschrift 1 152 536) oder Polycarbonatpolyolen erhalten werden, sind für das erfindungsgemäße Verfahren geeignet.

Selbstverständlich können Mischungen der o. g. Verbindungen mit mindestens zwei gegenüber Isocyanaten reaktionsfähigen Wasserstoffatomen mit einem Molekulargewicht von 400 bis 10 000, z. B. Mischungen von Polyethern und Polyestern, eingesetzt werden.

Vertreter dieser erfindungsgemäßen Verbindung sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl Hanser Verlag, München, 1966, z. B. auf den Seiten 45-71, sowie in Ullmanns Enzyklopädie der Technischen Chemie, Verlag Chemie, Weinheim, 4. Auflage, Band 19, im Stichwort « Polyurethane », S. 301-341 und im Stichwort « Polyalkylenglykole », S. 31-38, beschrieben.

Als difunktionelle Kettenverlängerungs- bzw. mehrfunktionelle Verbindungen (Vernetzer) mit Molmassen von etwa 18 bis 399 können H-aktive Gruppen aufweisende Verbindungen wie Wasser, Hydrazin, Glykole, Polyamine, Dihydrazidverbindungen, Aminoalkohole etc. verwendet werden, wie sie bereits für die Komponente C) aufgeführt wurden und wie sie üblicherweise für Polyurethansynthesen verwendet werden. Eine ausführliche Aufstellung geeigneter Verbindungen findet sich in der DE-A-2 854 384.

Als Polyisocyanate können die zur Herstellung von Polyurethanen bekannten Polyisocyanate eingesetzt werden, z. B. aliphatische, cycloaliphatische, araliphatische, aromatische und heterocyclische Polyisocyanate, vorzugsweise Diisocyanate, wie sie von z. B. W. Siefken in Justus Liebigs Annalen der Chemie, 562, Seiten 75-136 beschrieben werden, z. B. Hexan-1,6-diisocyanat, 1-Isocyanato-3,3,5-trimethyl-5-isocyanatomethyl-cyclohexan, Dicyclohexylmethan-2,4'- und/oder 4,4'-Diisocyanat, 1,3- und/oder 1,4-Cyclohexandiisocyanat, mit allen Stereoisomeren und deren Gemischen.

Besonders geeignet sind die aromatischen Polyisocyanate, wie Toluylen-2,4- und/oder -2,6-diisocyanat (TDI), Diphenylmethan-4,4'- und/oder -2,4'- und/oder -2,2'-diisocyanat (MDI) sowie die technischen Polyphenyl-polymethylen-polyisocyanate, wie sie durch Anilin-Formaldehyd-Kondensation und anschließende Phosgenierung erhalten und beispielsweise in den GB-PS-874 430 und 848 671 beschrieben werden (Mehrkernpolyisocyanate enthaltendes MDI). Die durch Abwandlung von TDI und MDI erhaltenen modifizierten Polyisocyanate, z. B. mit Polyolen über Urethangruppen modifizierte, Carbodiimidgruppenmodifizierte, Isocyanuratgruppen-modifizierte, biuretisierte, allophanatisierte oder Uretdiongruppenhaltige Polyisocyanate sind Beispiele für abgewandelte technische Isocyanate.

Derart geeignete Polyisocyanate technischer Art sind ausführlich in der DE-A 2 854 384 sowie in dem bereits zitierten Kunststoff-Handbuch, sowie in der bereits zitierten Ullmanns Enzyklopädie, 4. Auflage, Band 19, S. 303-304 angeführt.

Die Polyisocyanate können auch in Form von NCO-Prepolymeren aus den Ausgangspolyisocyanaten und z. B. höhermolekularen Polyolen eingesetzt werden.

Soweit Hilfs- und Zusatzstoffe noch nicht oder in nicht ausreichender Menge und Zusammensetzung enthalten sind, können diese auch zusätzlich in getrennter Dosierung oder in Vermischung mit einer der Reaktionskomponenten wie (zusätzlichen) höhermolekularen Polyhydroxylverbindungen, Polyisocyanaten oder NCO-Prepolymeren, Treibmitteln, Lösungsmitteln und ähnlichen verwendet werden.

Es handelt sich z. B. um die Gruppen der Katalysatoren bzw. Reaktionsverzögerer, Treibmittel, Zellregulatoren, Emulgatoren, Polysiloxane, Füllstoffe, Farbstoffe, Pigmente, Antioxidantien, UV-Absorber, Lichtschutzmittel, Stabilisatoren gegen Stickoxide, Flammschutzmittel, Hydrolyseschutzmittel sowie gegebenenfalls um kleine Mengen an monofunktionellen Kettenabbrechern.

Die Verarbeitung der erfindungsgemäßen Polyole zusammen mit den anderen Reaktanden der Polyurethanbildung kann nach allen an sich bekannten Verfahren und Prozessen erfolgen, z. B. in mehrstufigen Verfahren (NCO-Prepolymerbildung mit anschließender Umsetzung). Die Verarbeitung erfolgt überwiegend mittels entsprechender Dosier-, Misch- und/oder Austrags-Geräte bzw. in Formen, wie diese in der Polyurethanverfahrenstechnik üblich sind (vgl. z. B. Ullmanns Enzyklopädie der Technischen Chemie, Verlag Chemie-Weinheim, 4. Auflage, Band 19, Stichwort « Polyurethane », Seite 314-336).

Es können PU-Elastomere in nicht-zelliger Form als thermoplastische PU-Elastomere, Polyurethankautschuk, oder Gießelastomere, in zelliger Form, vorzugsw. in Rohdichten zwischen 300 bis über 1 000 kg/cm$^3$ oder Schaumstoffe in weichelastischer, semiflexibler oder hartelastischer Form, z. B. als Blockschaumstoffe, Formschaumstoffe in Rohdichtebereich z. B. von 20 bis 400 kg/m$^3$ und je nach Verwendungszweck mit geschlossenen und/oder offenen Zellen hergestellt werden.

Besonders geeignet sind die Polyolgemische dort, wo sie zur Herstellung von Formteilen mit dichter Oberfläche und einem nach innen zunehmend zelligen Kern verwendet werden (RIM-Prozeß zur Herstellung von sog. Integralschaumstoffen).

Diese Anwendung und die Herstellung gegebenenfalls zelliger Polyurethanelastomerer ist besonders bevorzugt.

Die erfindungsgemäßen Polyolgemische können auch zur Herstellung von im wesentlichen linearen, löslichen Polyurethanen für z. B. Beschichtungsmassen, Elasthanfäden oder Lacke, sowie auch zur Herstellung von Dispersionen, sowie allgemein als OH-reaktive Komponenten verwendet werden.

Beispiele

Polyetherpolyole, welche in den Beispielen verwendet werden :

Polyol A :

Trifunktionelles, auf Trimethylolpropan gestartetes Polyetherpolyol der OH-Zahl 27 ; aus 78 Gew.-% Propylenoxid und 22 Gew.-% Ethylenoxid (endständig). (PO/EO-Gehalte in Gew.-%).

Polyol B :

Trifunktionelles, auf Trimethylolpropan gestartetes Polyethertriol der OH-Zahl 35 ; aus 86,5 % Propylenoxid und 13,5 % Ethylenoxid (endständig).

Polyol C :

Auf einem Gemisch von Trimethylolpropan und Propylenglykol gestartetes Polyetherpolyol der Funktionalität 2,91 und einer OH-Zahl von 56 aus 100 % Propylenoxid (nicht erfindungsgemäß).

Polyol D :

Auf einem Gemisch von Trimethylolpropan und Propylenglykol (Verhältnis 84 : 16) gestartetes Polyetherpolyol der Funktionalität 2,78 und einer OH-Zahl 42 aus 100 % Propylenoxid (nicht erfindungsgemäß).

Polyol E :

Auf Ethylendiamin gestartetes, tetrafunktionelles Polyoxypropylenpolyetherpolyol der OH-Zahl 60 (nicht erfindungsgemäß).

Polyol F :

Trifunktionelles, auf Trimethylolpropan gestartetes Polyethertriol der OH-Zahl 28 aus 83 % Propylenoxid und 17 % Ethylenoxid (endständig).

Polyol G :

Trifunktionelles, auf Trimethylolpropan gestartetes Polyethertriol der OH-Zahl 28 aus 87 % Propylenoxid und 13 % Ethylenoxid (endständig).

Polyol H :

Difunktioneller Polypropylenglykolether der OH-Zahl 56 (nicht erfindungsgemäß).

Polyol I :

Difunktionelles, auf Propylenglykol gestartetes Polyetherdiol der OH-Zahl 56 aus 92,5 % Propylenoxid und 7,5 % Ethylenoxid (endständig).

Polyol K :

Difunktionelles, auf Propylenglykol gestartetes Polyetherdiol der OH-Zahl 56 aus 80 % Propylenoxid und 20 % Ethylenoxid (endständig).

Polyol L :

Difunktioneller Polyoxypropylenglykolether der OH-Zahl 28 (nicht erfindungsgemäß).

Polyol M :

Difunktionelles, auf Propylenglykol gestartetes Polyetherdiol der OH-Zahl 28 aus 85 % Propylenoxid und 15 % Ethylenoxid (endständig).

Polyol N :

Difunktionelles, auf Propylenglykol gestartetes Polyetherdiol der OH-Zahl 28 aus 80 % Propylenoxid

7

und 20 % Ethylenoxid (endständig).

Ethylenglykol/Propylenoxid-Addukte :

Addukt I : aus Ethylenglykol und Propylenoxid (Molverhältnis 1 : 0,25).

In einem Autoklav, der mit einer Heiz- und Kühlvorrichtung, einem Rührwerk, einer Einrichtung zum Verdrängen der Luft (Vakuumanschluß und Stickstoffzuleitung), und einer Vorrichtung zur Dosierung des Alkylenoxids versehen war, wurden 7 294 g Ethylenglykol (117,6 mol) bei Raumtemperatur vorgelegt. Durch zweimaliges Evakuieren und Wiederauffüllen des Reaktionsgefäßes mit Stickstoff wurde der Luftsauerstoff entfernt. Nach Erwärmen auf 80 °C wurden 90 g 50 %ige wäßrige Kalilauge zugegeben. Anschließend wurde bei einem Druck von 0,4-0,6 bar und einer Temperatur von 100-105 °C 1 706 g (29,4 mol) Propylenoxid allmählich zudosiert (3 Stunden) (Molverhältnis EG/PO = 1 : 0,25) und durch Kühlen oder Heizen des Reaktionsgemisches die Reaktionstemperatur in diesem Bereich gehalten. Nach beendeter Propylenoxidzugabe wurde noch weitere 3 Stunden bei 100-105 °C gerührt. Das alkalische Polymerisat wurde nach Zugabe von 900 g Wasser mit 319,5 g 12,5 %iger Schwefelsäure neutralisiert. Das Wasser wurde bei 90-105 °C im Vakuum abdestilliert, anschließend das Addukt von den abgeschiedenen Salzen abfiltriert. Das erhaltene farblose Produkt hatte die oben aufgeführte Zusammensetzung und Eigenschaften.

Daten :

| | | |
|---|---|---|
| OH-Zahl (mg KOH/g) | 1 462 | (OH-Zahl durch Umsetzung mit Phthalsäureanhydrid bestimmt) |
| pH | 5,85 | (bei 10 % Wasserzusatz) |
| Viskosität (mPa . s/25 °C) | 25,7 | |
| Säurezahl (mg KOH/g) | 0,04 | |
| Wassergehalt (%) | 0,01 | |

gaschromatographische Zusammensetzung :

64,1 % Ethylenglykol
32,2 % Monopropoxylierungsprodukt
 3,7 % Dipropoxylierungsprodukt

Addukt II : aus 1 mol Ethylenglykol und 0,5 mol Propylenoxid (mit KOH katalysiert und mit Schwefelsäure neutralisiert — Herstellungsverfahren wie bei Addukt I).

Daten

| | | |
|---|---|---|
| OH-Zahl (mg KOH/g) | 1 230 | (Phthalsäureanhydrid-Methode) |
| pH | 5,5 | |
| Viskosität (mPa · s/25 °C) | | 29,3 |
| Säurezahl (mg KOH/g) | | 0,05 |
| Wassergehalt (%) | | 0,02 |

gaschromatographisch bestimmte Zusammensetzung :

44,0 % Ethylenglykol
46,0 % Monopropoxylierungsprodukt
10,0 % Dipropoxylierungsprodukt
 (0,1 % Tripropoxylierungsprodukte).

Addukt III : aus 1 mol Ethylenglykol und 0,75 mol Propylenoxid ; Verfahren wie bei I (nicht erfindungsgemäß).

Daten

| | | |
|---|---|---|
| OH-Zahl (mg KOH/g) | 1 018 | (Acetanhydrid) |
| pH | 5,3 | |
| Viskosität (mPa . s/25 °C) | 35,8 | |
| Säurezahl (mg KOH/g) | 0,07 | |
| Wassergehalt (%) | 0,06 | |

gaschromatographisch bestimmte Zusammensetzung :

27,1 % Ethylenglykol
50,0 % Monopropoxylierungsaddukt
21,5 % Dipropoxylierungsprodukt
 1,4 % Tripropoxylierungsprodukt

·Addukt IV : aus 1 mol Ethylenglykol und 1 mol Propylenoxid (nicht erfindungsgemäß).

Daten :

| | |
|---|---|
| OH-Zahl (mg KOH/g) | 85,5 |
| pH | 7,5 |
| Viskosität (mPa · s/25 °C) | 46,6 |
| Säurezahl (mg KOH/g) | 0,06 |
| Wasser (%) | 0,03 |

gaschromatographisch bestimmte Zusammensetzung :

16,0 % Ethylenglykol
46,3 % Monopropoxylierungsprodukt
33,6 % Dipropoxylierungsprodukt
 4,1 % Tri- und Tetrapropoxylierungsprodukt

Bemerkung : Wenn hier und im folgenden von « Addukt » die Rede ist, so ist immer das Gemisch aus Ethylenglykol und seinen Propoxylierungsprodukten gemeint.

Beispiel 1 : Lagerstabiles Polyolgemisch gemäß Erfindung

1.1 100 g Polyol A werden mit verschiedenen Mengen Addukt I unter Rühren vermischt und bei Raumtemperatur gelagert. Die erhaltenen Ergebnisse sind in Tabelle 1 zusammengefaßt.

Tabelle 1

Phasenstabilitäten von Polyol A/Addukt I-Gemischen.

| Polyol A (g) | Addukt I (g) | Ethylenglykolgehalt[2] aus Addukt I (g) | Gew.-% in Mischung | Misch-[1] OH-Zahl | Phasen |
|---|---|---|---|---|---|
| 100 | 5 | 3,2 | 3,05 | 95 | 1 |
| 100 | 10 | 6,4 | 5,82 | 157 | 1 |
| 100 | 15 | 9,6 | 8,35 | 214 | 1 |
| 100 | 20 | 12,8 | 10,67 | 266 | 1 |
| 100 | 25 | 16,0 | 12,8 | 314 | 1 |
| 100 | 30 | 19,2 | 14,76 | 358 | 1 |
| 100 | 40 | 25,6 | 18,29 | 437 | 2 |
| 100 | 45 | 28,8 | 15,86 | 472 | 2 |
| 100 | 50 | 32 | 21,33 | 505 | 2 |
| 100 | 100 | 64 | 32,00 | 745 | 2 |

[1] rechnerisch ermittelt (OH-Zahl in mg KOH/g)
[2] Ethylenglykolgehalt aus Addukt I, in g bzw. in Gew.-% im Polyolgemisch.

1.2 Wiederholt man diesen Versuch mit der Abänderung, daß Ethylenglykol anstelle von Addukt I verwendet wird, so erhält man die in Tabelle 2) aufgelisteten Ergebnisse.

Tabelle 2

Phasenstabilität von Polyol A/Ethylenglykol-Gemischen (Vergleichsversuche)

| Polyol A (g) | Ethylenglykol (g) | (Gew.-%) | Misch- OH-Zahl[1] | Phasen |
|---|---|---|---|---|
| 100 | – | – | 27 | 1 |
| 100 | 5 | 4,76 | 112 | 1 |
| 100 | 10 | 9,09 | 189 | 2 |
| 100 | 15 | 13,04 | 259 | 2 |
| 100 | 20 | 16,67 | 324 | 2 |
| 100 | 25 | 20,0 | 383 | 2 |
| 100 | 30 | 23,08 | 438 | 2 |
| 100 | 50 | 33,33 | 620 | 2 |
| 100 | 100 | 50,0 | 917 | 2 |
| 100 | 200 | 66,6 | 123 | 2 |

[1] rechnerisch ermittelt

1.3 Wiederholt man den Versuch mit der Abänderung, daß ein Gemisch aus Ethylenglykol und Propandiol-1,2 anstelle von Addukt I verwendet wird, so erhält man die in Tabelle 3 aufgelisteten Ergebnisse.

Tabelle 3

Phasenstabilität von Polyol A/Ethylenglykol/Propandiol-1,2-Gemisch (Vergleichsversuche)

| Polyol A (g) | Ethylen- glykol (g) | Propan- diol-1,2 (g) | Misch OH-Zahl | EG[1] (Gew.-%) | Phasen |
|---|---|---|---|---|---|
| 100 | 6,67 | 6,67 | 198 | 5,9 | 1 |
| 100 | 6,67 | 13,33 | 287 | 5,55 | 1 |
| 100 | 6,67 | 26,67 | 409 | 5,00 | 1 |
| 100 | 6,67 | ≥40 | ≥508 | 4,55 | 2 |
| 100 | 13,3 | ≥6,67 | ≥305 | 11,08 | 2 |
| 100 | 20 | ≥6,67 | ≥384 | 15,79 | 2 |
| 100 | 26,67 | ≥6,67 | ≥455 | 20,05 | 2 |
| 100 | 33,33 | ≥6,67 | ≥519 | 23,81 | 2 |
| 100 | 40 | ≥6,67 | ≥578 | 27,27 | 2 |

[1] EG = Ethylenglykol; Gew.-% im Polyolgemisch.

1.4 Der Ethylenglykol-Gehalt von Addukt I-haltigen Gemischen (s. Tabelle 1) kann durch Zusatz von freiem Ethylenglykol noch weiter erhöht werden. So sind Addukte aus 100 g Polyol A, 15 g Addukt I und 1 g Ethylenglykol oder aus 100 g Polyol A, 20 g Addukt I und 1,5 g Ethylenglykol ebenfalls einphasig lagerstabil und weisen eine noch weiter erhöhte Misch-OH-Zahl plus Ethylenglykol-Anteil auf. Das Ethylenglykol kann auch durch eine gleiche Menge an Butandiol-1,4 ersetzt werden.

**0 095 116**

Zusammenfassung von Versuch 1 :

Ein Gemisch aus Polyol A und Ethylenglykol ist nur bis zu einem Ethylenglykolgehalt von ca. 5 Gew.-%, der einer Gemisch-OH-Zahl von ca. 150 entspricht, einphasig (s. Tabelle 2). Steigert man den Ethylenglykolanteil, so tritt Phasentrennung ein.

Ersetzt man Ethylenglykol durch ein ca. 64 Gew.-% Ethylenglykol enthaltendes Propoxylierungsgemisch, wie es durch Umsetzung von Ethylenglykol mit Propylenoxid (1 : 0,25) (Addukt I) zustande kommt, so kann eine Misch-OH-Zahl von ca. 360 erreicht werden. Dies entspricht ca. 15 Gew.-% freien Ethylenglykols im Polyolgemisch (da Addukt I zu ca. 64 Gew.-% aus Ethylenglykol besteht).

Versucht man den erwünschten Effekt der Kombination einer möglichst hohen OH-Zahl bei möglichst hohem Gehalt an freiem Ethylenglykol und homogener Mischbarkeit dadurch nachzustellen, daß man verschiedene Mengen eines Ethylenglykol/Propandiol-1,2-Gemisches mit verschiedenen Ethylenglykol/Propandiol-1,2-Verhältnissen mit dem Polyol A vermischt (s. Tabelle 3), so kann zwar eine höhere Gemisch-OH-Zahl als bei der Vermischung mit reinem Ethylenglykol, jedoch bei vergleichbar hoher Ethylenglykolmenge bei weitem nicht die Gemisch-OH-Zahl wie bei Verwendung von Addukt I erreicht werden.

Desgleichen ist der Anteil an Ethylenglykol, der homogen mit Polyol A vermischt werden kann, sowohl absolut als auch in Beziehung auf das Polyol als auch in Beziehung auf das niedermolekulare Gemisch aus Ethylenglykol und Propandiol-1,2 kleiner als bei Verwendung von Addukt 1. Überdies ist ein hoher Gehalt an Propandiol-1,2 für die Anwendung zur Polyurethansynthese unerwünscht. Es ist das Ziel der Erfindung, ein Polyolgemisch mit möglichst hoher OH-Zahl und möglichst hohem Ethylenglykolgehalt in homogener Form und bei gleichzeitiger Anwesenheit von möglichst geringen Anteilen an propoxyliertem Ethylenglykol, für die Polyurethanreaktion zur Verfügung zu stellen.

### Beispiel 2 : Lagerstabiles Polyolgemisch (nicht erfindungsgemäß)

In diesem Beispiel wird gezeigt, daß durch Propoxylierung von Ethylenglykol mit Propylenoxid im Verhältnis von 1 mol Ethylenglykol auf 1 mol Propylenoxid (Addukt IV) (s. Tabelle 4) und gegebenenfalls auch bei Rückverdünnung mit Ethylenglykol und Verwendung dieses Produktgemisches (s. Tabelle 5) nicht die gleichen guten Ergebnisse wie bei Verwendung des Propoxylierungsproduktes aus Beispiel 1 erzielt werden.

100 g Polyol A und verschiedene Mengen Addukt IV werden bei Raumtemperatur miteinander vermischt.

Die erhaltenen Daten sind in Tabelle 4 und 5 aufgelistet.

Dabei enthält Tabelle 4 die Werte ohne, Tabelle 5 die Werte mit Rückverdünnung von Addukt IV mit Ethylenglykol.

Tabelle 4

Phasenstabilitäten von Polyol A/Addukt IV-Gemischen

| Polyol A (g) | Addukt IV[1] (g) | Misch-OH-Zahl | EG[2] (Gew.-%) | Phasen |
|---|---|---|---|---|
| 100 | 5 | 66 | 0,76 | 1 |
| 100 | 10 | 102 | 1,45 | 1 |
| 100 | 15 | 135 | 2,09 | 1 |
| 100 | 20 | 165 | 2,67 | 1 |
| 100 | 25 | 193 | 3,20 | 1 |
| 100 | 30 | 218 | 3,69 | 1 |
| 100 | 40 | 264 | 4,57 | 1 |
| 100 | 50 | 303 | 5,33 | 1 |
| 100 | 100 | 441 | 8,00 | 1 |
| 100 | 200 | 579 | 10,67 | 1 |

[1] OH-Zahl 855

[2] Ethylenglykol im Gemisch, berechnet aus EG-Gehalt im Addukt IV

11

Tabelle 5

Phasenstabilitäten von Polyol A/Ethylenglykol/Addukt IV-Gemischen (Vergleich)

| Polyol A (g) | Ethylen- glykol (g) | Addukt IV (g) | Misch- OH-Zahl | EG[3] (Gew.-%) | Phasen |
|---|---|---|---|---|---|
| 100 | 6,67 | 60 | 272 | 9,76 | 1 |
| 100 | 13,33 | 53,33 | 297 | 13,12 | 1 |
| 100 | 20 | 46,67 | 321 | 16,48 | 2 |
| 100 | 26,67 | 40 | 346 | 19,84 | 2 |
| 100 | 33,33 | 33,33 | 371 | 23,2 | 2 |
| 100 | 40 | 26,67 | 396 | 26,56 | 2 |
| 100 | 46,67 | 20 | 421 | 29,92 | 2 |
| 100 | 53,33 | 13,33 | 446 | 33,28 | 2 |
| 100 | 60 | 6,67 | 470 | 36,64 | 2 |
| 100 | - | 40 | 278 | 4,57 | 1 |
| 100 | 6,67 | 33,33 | 325 | 8,57 | 1 |
| 100 | 13,33 | 26,67 | 372 | 12,57 | 2 |
| 100 | 20 | 20 | 419 | 16,57 | 2 |
| 100 | 26,67 | 13,33 | 466 | 20,57 | 2 |
| 100 | 33,33 | 6,67 | 514 | 24,57 | 2 |

[3] Gesamt-Ethylenglykol-Anteil im Gemisch (in Gew.-%) (aus Anteil in Addukt-IV plus zugesetzte EG-Menge).

### Zusammenfassung von Beispiel 2

Dieser Versuch zeigt, daß unter Verwendung von Addukt IV zwar wesentlich höhere Gemisch-OH-Zahlen einphasig stabiler Gemische zu erreichen sind, daß dabei aber nicht die gewünschte, hohe Ethylenglykolmenge zu erreichen ist. So ist die anteilige Ethylenglykol-Menge selbst bei der Verwendung von 100 Teilen Addukt IV auf 100 Teile Polyol A (s. Tabelle 4) mit ca. 16 g Ethylenglykol identisch wie bei der Beimischung von 25 Teilen Addukt I.

### Beispiel 3

Dieses Beispiel verdeutlicht die Wirksamkeit der Addukte I und II (erfindungsgemäß) sowie das Ergebnis des Zusatzes der Addukte III und IV (nicht erfindungsgemäß) zur Herstellung phasenstabiler Polyolgemische mit verschiedenen Polyolen.

Tabelle 6 enthält (zum Vergleich) die Mischbarkeit verschiedener Mengen Ethylenglykol mit den Polyetherpolyolen B bis E.

Tabellen 7 a-d listen die Phasenstabilitäten der Polyolgemische aus den Addukten I-IV mit den Polyolen B bis E auf.

Tabelle 8 enthält die Mischbarkeiten von Addukt IV mit den Polyethern B bis E unter Zusatz verschiedener Mengen an Ethylenglykol.

Es wurde jeweils so vorgegangen, daß die angegebenen Mengen unter Rühren miteinander vereinigt und die Mischungen auf ihre Phasenstabilität visuell beobachtet wurden.

Tabelle 6

Phasenstabilitäten verschiedener Polyether/Ethylenglykol-Gemische (Vergleichsversuche)

| 100 g Poly-ether | Ethylenglykol (g) | Misch-OH-Zahl | EG[1] (Gew.-%) | Phasen |
|---|---|---|---|---|
| Polyol B | 5 | 119 | 4,76 | 1 |
| Polyol B | ≥10 | ≥196 | ≥9,09 | 2 |
| Polyol C | ≥ 5 | ≧139 | ≥4,76 | 2 |
| Polyol D | 5 | 126 | ≥4,76 | 1 |
| Polyol D | ≥10 | ≧202 | ≥9,09 | 2 |
| Polyol E | ≥ 5 | ≧143 | ≥4,76 | 2 |

[1] Ethylenglykol in der Mischung (in Gew.-%)

Tabelle 6 lehrt, daß nur relativ wenig reines Ethylenglykol den Polyethern B bis E homogen zugemischt werden kann.

Tabelle 7a)

Phasenstabilitäten der Polyether B bis D in Abmischung mit Addukt I

| 100 g Poly-ether | Addukt I (g) | Misch-OH-Zahl | EG[1] (Gew.-%) | Phasen |
|---|---|---|---|---|
| Polyol B[2] | 5 Addukt I | 103 | 3,05 | 1 |
| Polyol B | 10 Addukt I | 165 | 5,82 | 1 |
| Polyol B | 20 Addukt I | 273 | 10,67 | 2 |
| Polyol B | 30 Addukt I | 364 | 14,76 | 2 |
| Polyol C[3] | 5 Addukt I | 123 | 3,05 | 1 |
| Polyol C | 10 Addukt I | 184 | 5,82 | 2 |
| Polyol C | 20 Addukt I | 290 | 10,67 | 2 |
| Polyol C | 30 Addukt I | 380 | 14,76 | 2 |
| Polyol D[3] | 5 Addukt I | 110 | 3,05 | 1 |
| Polyol D | 10 Addukt I | 171 | 5,82 | 2 |
| Polyol D | 20 Addukt I | 279 | 10,67 | 2 |
| Polyol D | 30 Addukt I | 370 | 14,76 | 2 |

[1] Ethylenglykolgehalt im Gemisch (in Gew.-%)
[2] erfindungsgemäßes Polyetherpolyol
[3] nicht erfindungsgemäßes Polyetherpolyol

# 0 095 116

## Tabelle 7b)

Phasenstabilitäten der Polyether B bis D in Abmischung mit Addukt II

| 100 g Poly-ether | Addukt II (g) | Misch-OH-Zahl | EG[1] (Gew.-%) | Phasen |
|---|---|---|---|---|
| Polyol B[2] | 5 Addukt II | 90,5 | 2,09 | 1 |
| Polyol B | 10 Addukt II | 140,9 | 3,99 | 1 |
| Polyol B | 20 Addukt II | 229,2 | 7,32 | 1 |
| Polyol B | 30 Addukt II | 303,8 | 10,13 | 1 |
| Polyol C[3] | 5 Addukt II | 110,5 | 2,09 | 1 |
| Polyol C | 10 Addukt II | 160 | 3,99 | 1 |
| Polyol C | 20 Addukt II | 246,7 | 7,33 | 1 |
| Polyol C | 30 Addukt II | 320 | 10,13 | 2 |
| Polyol D[3] | 5 Addukt II | 97,1 | 2,09 | 1 |
| Polyol D | 10 Addukt II | 147,3 | 3,99 | 1 |
| Polyol D | 20 Addukt II | 235 | 7,33 | 2 |
| Polyol D | 30 Addukt II | 309,2 | 10,13 | 2 |

[1] bis 3) wie in Tabelle 7a).

## Tabelle 7c)

Phasenstabilitäten der Polyether B bis D in Abmischung mit Addukt III (nicht erfindungsgemäß)

| 100 g Poly-ether | Addukt III[4] (g) | Misch-OH-Zahl | EG[1] (Gew.-%) | Phasen |
|---|---|---|---|---|
| Polyol B[2] | 5 Addukt III | 81,8 | 1,29 | 1 |
| Polyol B | 10 Addukt III | 124,36 | 2,46 | 1 |
| Polyol B | 20 Addukt III | 198,8 | 4,52 | 1 |
| Polyol B | 30 Addukt III | 261,8 | 6,25 | 1 |
| Polyol C[3] | 5 Addukt III | 101,8 | 1,29 | 1 |
| Polyol C | 10 Addukt III | 143,5 | 2,46 | 1 |
| Polyol C | 20 Addukt III | 216 | 4,52 | 1 |
| Polyol C | 30 Addukt III | 278 | 6,25 | 2 |
| Polyol D[3] | 5 Addukt III | 88,5 | 1,29 | 1 |
| Polyol D | 10 Addukt III | 130,7 | 2,46 | 1 |
| Polyol D | 20 Addukt III | 204,7 | 4,52 | 1 |
| Polyol D | 30 Addukt III | 267,2 | 6,25 | 1 |

[1] Ethylenglykolgehalt im Gemisch (in Gew.-%)
[2] erfindungsgemäßes Polyetherpolyol
[3] nicht erfindungsgemäßes Polyetherpolyol
[4] nicht erfindungsgemäßes Addukt

14

Tabelle 7d)

Phasenstabilitäten der Polyether B bis D in Abmischung mit Addukt IV
(nicht erfindungsgemäß)

| 100 g Polyol | Addukt IV[4] (g) | Misch- OH-Zahl | EG[1] (Gew.-%) | Phasen |
|---|---|---|---|---|
| Polyol B[2] | 5 Addukt IV | 74 | 0,76 | 1 |
| Polyol B | 10 Addukt IV | 110 | 1,45 | 1 |
| Polyol B | 20 Addukt IV | 172 | 2,67 | 1 |
| Polyol B | 30 Addukt IV | 224 | 3,69 | 1 |
| Polyol C[3] | 5 Addukt IV | 94 | 0,76 | 1 |
| Polyol C | 10 Addukt IV | 128 | 1,45 | 1 |
| Polyol C | 20 Addukt IV | 189 | 2,67 | 1 |
| Polyol C | 30 Addukt IV | 240 | 3,69 | 1 |
| Polyol D[3] | 5 Addukt IV | 81 | 0,76 | 1 |
| Polyol D | 10 Addukt IV | 116 | 1,45 | 1 |
| Polyol D | 20 Addukt IV | 178 | 2,67 | 1 |
| Polyol D | 30 Addukt IV | 230 | 3,69 | 1 |

[1] bis [4] wie in Tabelle 7c).

15

Tabelle 8

Phasenstabilitäten verschiedener Polyether/Addukt IV/Ethylenglykol-Gemische (nicht erfindungsgemäß)

| 100 g Polyol | Addukt IV[4] (g) | + | Ethylenglykol (g) | Gesamt-EG 1) (Gew.-%.) | Misch-OH-Zahl | Phasen |
|---|---|---|---|---|---|---|
| Polyol B[2] | 5 | | 25 | 19,85 | 407 | 2 |
| Polyol B | 10 | | 20 | 16,62 | 371 | 2 |
| Polyol B | 15 | | 15 | 13,38 | 334 | 2 |
| Polyol B | 20 | | 10 | 10,15 | 298 | 2 |
| Polyol B | 25 | | 5 | 6,92 | 261 | 2 |
| Polyol C[3] | 5 | | 25 | 19,85 | 423 | 2 |
| Polyol C | 10 | | 20 | 16,62 | 387 | 2 |
| Polyol C | 15 | | 15 | 13,38 | 370 | 2 |
| Polyol C | 20 | | 10 | 10,15 | 314 | 2 |
| Polyol C | 25 | | 5 | 6,92 | 278 | 2 |
| Polyol D[3] | 5 | | 25 | 19,85 | 267 | 2 |
| Polyol D | 10 | | 20 | 16,62 | 303 | 2 |
| Polyol D | 15 | | 15 | 13,38 | 340 | 2 |
| Polyol D | 20 | | 10 | 10,15 | 376 | 2 |
| Polyol D | 25 | | 5 | 6,92 | 413 | 2 |

[1] bis [4] s. Ende der Tabelle

Tabelle 8 (Fortsetzung)

| 100 g Polyol | Adukt IV[4] (g) | + | Ethylenglykol (g) | Gesamt- EG 1) (Gew.-%) | Misch-OH-Zahl | Phasen |
|---|---|---|---|---|---|---|
| Polyol E[2] | 5 | | 25 | 19,85 | 426 | 2 |
| Polyol E | 10 | | 20 | 16,62 | 376 | 2 |
| Polyol E | 15 | | 15 | 13,38 | 354 | 2 |
| Polyol E | 20 | | 10 | 10,15 | 317 | 2 |
| Polyol E | 25 | | 5 | 6,92 | 281 | 2 |

1) Gesamt-Ethylenglykolgehalt im Gemisch
2) erfindungsgemäßer Polyether
3) nicht erfindungsgemäßer Polyether
4) nicht erfindungsgemäßes Addukt.

# 0 095 116

Zusammenfassung von Beispiel 3

Tabellen 7a) und 7b) zeigen, daß die erfindungsgemäßen Addukte I und II mit dem Oxyethylengruppen-haltigen Polyether B (bzw. A) besser mischbar sind als mit den nicht erfindungsgemäßen Polyethern C und D.

Der Vergleich mit dem Polyether A mit höherem Oxyethylengruppen-Gehalt im Polyether zeigt, daß dieser Polyether mit den Addukten I und II in noch höheren Anteilen mischbar ist als dies bei Polyether B der Fall ist.

Die (nicht erfindungsgemäßen) Addukte III und IV sind zwar auch mit den Polyethern B bis E in nahezu allen Verhältnissen homogen mischbar, jedoch ist der Anteil des Ethylenglykols relativ gering und der Anteil an mono- und di-propoxyliertem Ethylenglykol für die Anwendung in Polyurethanen mit guten thermischen Eigenschaften zu hoch (vgl. Tabelle 7c) und 7d)).

Versucht man in den homogenen, binären Gemischen aus Polyethern B bis E und Addukt IV durch weiteren Zusatz von freiem Ethylenglykol den Gesamt-Ethylenglykol-Anteil im Gemisch zu erhöhen, so werden nurmehr 2-phasige Gemische erhalten (vgl. Tabelle 8).

## Beispiel 4

Beispiel 4 untersucht, inwieweit die in den Beispielen 1 bis 3 an trifunktionellen Polyetherpolyolen gewonnenen Erkenntnisse auch für lineare Polyether gültig sind.

Die Komponenten-Addukte I und II und Polyetherpolyole H bis N werden intensiv miteinander vermischt und visuell auf Lagerstabilität untersucht.

Die erhaltenen Daten sind in Tabelle 9 zusammengefaßt.

### Tabelle 9

Lagerstabilität von Gemischen der Polyole H bis N mit den EG/PO-Addukten I-IV

| 100 g Polyol | EG/PO-Addukt | Misch-OH-Zahl | EG[1] (Gew.-%) | Phasen |
|---|---|---|---|---|
| Polyol H[3] | 5 g Addukt I | 122,9 | 3,05 | 1 |
| Polyol H | 10 g Addukt I | 183,8 | 5,82 | 2 |
| Polyol H | 20 g Addukt I | 290,3 | 10,67 | 2 |
| Polyol H | 30 g Addukt I | 380,5 | 14,76 | 2 |
| Polyol I[2] | 5 g Addukt I | 122,9 | 3,05 | 1 |
| Polyol I | 10 g Addukt I | 183,8 | 5,82 | 1 |
| Polyol I | 20 g Addukt I | 290,3 | 10,67 | 2 |
| Polyol I | 30 g Addukt I | 380,5 | 14,76 | 2 |
| Polyol K[2] | 5 g Addukt I | 122,9 | 3,05 | 1 |
| Polyol K | 10 g Addukt I | 183,8 | 5,82 | 1 |
| Polyol K | 20 g Addukt I | 290,3 | 10,67 | 1 |
| Polyol K | 30 g Addukt I | 380,5 | 14,76 | 1 |
| Polyol L[3] | 5 g Addukt I | 96,3 | 3,05 | 1 |
| Polyol L | 10 g Addukt I | 158,4 | 5,82 | 2 |
| Polyol L | 20 g Addukt I | 267 | 10,67 | 2 |
| Polyol L | 30 g Addukt I | 358,9 | 14,76 | 2 |

[1]) bis [3]) s. Ende der Tabelle

18

Tabelle 9 (Fortsetzung)

| 100 g Polyol | EG/PO-Addukt | Misch-OH-Zahl | EG[1] (Gew.-%) | Phasen |
|---|---|---|---|---|
| Polyol M[2] | 5 g Addukt I | 96,3 | 3,05 | 1 |
| Polyol M | 10 g Addukt I | 158,4 | 5,82 | 1 |
| Polyol M | 20 g Addukt I | 267 | 10,67 | 2 |
| Polyol M | 30 g Addukt I | 358,9 | 14,76 | 2 |
| Polyol N[2] | 5 g Addukt I | 96,3 | 3,05 | 1 |
| Polyol N | 10 g Addukt I | 158,4 | 5,82 | 1 |
| Polyol N | 20 g Addukt I | 267 | 10,67 | 1 |
| Polyol N | 30 g Addukt I | 358,9 | 14,76 | 2 |
| Polyol H[3] | 5 g Addukt II | 110,5 | 2,09 | 1 |
| Polyol H | 10 g Addukt II | 160 | 3,99 | 1 |
| Polyol H | 20 g Addukt II | 246,7 | 7,32 | 2 |
| Polyol H | 30 g Addukt II | 320 | 10,13 | 2 |
| Polyol I[2] | 5 g Addukt II | 110,5 | 2,09 | 1 |
| Polyol I | 10 g Addukt II | 160 | 3,99 | 1 |
| Polyol I | 20 g Addukt II | 246,7 | 7,32 | 1 |
| Polyol I | 30 g Addukt II | 320 | 10,13 | 2 |
| Polyol K[2] | 5 g Addukt II | 110,5 | 2,09 | 1 |
| Polyol K | 10 g Addukt II | 160 | 3,99 | 1 |
| Polyol K | 20 g Addukt II | 246,7 | 7,32 | 1 |
| Polyol K | 30 g Addukt II | 320 | 10,13 | 1 |
| Polyol L[3] | 5 g Addukt II | 83,8 | 2,09 | 1 |
| Polyol L | 10 g Addukt II | 134,5 | 3,99 | 1 |
| Polyol L | 20 g Addukt II | 223,3 | 7,32 | 2 |
| Polyol L | 30 g Addukt II | 298,5 | 10,13 | 2 |
| Polyol M[2] | 5 g Addukt II | 83,8 | 2,09 | 1 |
| Polyol M | 10 g Addukt II | 134,5 | 3,99 | 1 |
| Polyol M | 20 g Addukt II | 223,3 | 7,32 | 1 |
| Polyol M | 30 g Addukt II | 298,5 | 10,13 | 2 |
| Polyol N[2] | 5 g Addukt II | 83,8 | 2,09 | 1 |
| Polyol N | 10 g Addukt II | 134,5 | 3,99 | 1 |
| Polyol N | 20 g Addukt II | 223,3 | 7,32 | 1 |
| Polyol N | 30 g Addukt II | 298,5 | 10,13 | 1 |

[1] Ethylenglykolgehalt in der Mischung (in Gew.-%)
[2] erfindungsgemäßer Polyether
[3] nicht erfindungsgemäßer Polyether

## 0 095 116

### Zusammenfassung der Beispiele 1 bis 4

Die Beispiele belegen, daß di- und trifunktionelle Polyetherpolyole um so besser einphasig homogene Gemische mit relativ hohem Adduktgehalt bei hohem Ethylenglykolanteil und hoher Misch-OH-Zahl mit den erfindungsgemäßen Addukten I bzw. II aus Ethylenglykol und Propylenoxid ergeben, wenn diese di- und trifunktionellen Polyetherpolyole einen endständigen Polyoxyethylenblock aufweisen und daß die homogene Mischbarkeit bei relativ hohem Ethylenglykolgehalt und hoher Misch-OH-Zahl mit zunehmendem Anteil an Polyoxyethylenblöcken im Polyether deutlich zunimmt.

Die Beispiele belegen fernerhin, daß di- und trifunktionelle Polyetherpolyole mit den erfindungsgemäßen Addukten aus Ethylenglykol und Propylenoxid, wobei diese Addukte einen Gehalt an Ethylenglykol von 40 bis 80 Gew.-%, bevorzugt 54 bis 80 Gew.-%, aufweisen, einphasig stabile Gemische mit einem besonders hohen Gehalt an diesem Addukt aus Ethylenglykol und Propylenoxid ergeben, wenn diese di- und trifunktionellen Polyetherpolyole einen endständigen Polyoxyethylen-Block von > 12,5 %, besonders aber ⩾ 20 Gew.-%, aufweisen.

Die Beispiele belegen fernerhin, daß einphasig stabile Gemische aus diesen di- und trifunktionellen Polyetherpolyolen mit den erfindungsgemäß einzusetzenden Addukten aus Ethylenglykol und Propylenoxid sich nicht dadurch ersetzen lassen, daß man Gemische aus Ethylenglykol und Propandiol-1,2 verwendet.

Die Beispiele belegen fernerhin, daß es bei gleichem Ethylenglykol-Gehalt günstiger ist, ein Addukt aus Ethylenglykol und Propylenoxid mit hohem Ethylenglykolgehalt als ein Addukt aus Ethylenglykol und Propylenoxid mit niederem Ethylenglykol-Gehalt zu verwenden, da dann der Anteil an ungünstigen Propoxylierungsprodukten des Ethylenglykols besonders gering ist.

### Beispiel 5

In diesem Beispiel wird die Mischbarkeit der Addukte I bis IV in einer Polyether-Reihe mit abnehmendem Gehalt an endständigen Oxethylen-Sequenzen untersucht (vgl. Tabelle 10) :

| Polyether A | 22 % Ethylenoxid-Einbau, | endständig |
| Polyether F | 17 % Ethylenoxid-Einbau, | endständig |
| Polyether G | 13 % Ethylenoxid-Einbau, | endständig |

### Tabelle 10

Phasenstabilitäten von Polyether/EG.PO-Addukt-Gemischen

| 100 g Polyether | EG/PO-Addukt (g) | Gew.%/EG im Ge-misch | Misch-OH-Zahl | Phasen |
|---|---|---|---|---|
| Polyol A | 30 g Addukt I | 14,76 | 358,1 | 1 |
| Polyol A | 30 g Addukt II | 10,13 | 299,7 | 1 |
| Polyol A | 30 g Addukt III | 6,25 | 255,7 | 1 |
| Polyol A | 30 g Addukt IV | 3,69 | 218,1 | 1 |
| Polyol F | 20 g Addukt I | 9,32 | 267 | 1 |
| Polyol F | 25 g Addukt I | 12,8 | 314,8 | 1 |
| Polyol F | 30 g Addukt I | 14,76 | 358,9 | 2 |
| Polyol F | 30 g Addukt II | 10,13 | 298,4 | 1 |
| Polyol F | 30 g Addukt III | 6,25 | 256,4 | 1 |
| Polyol F | 30 g Addukt IV | 3,69 | 218,8 | 1 |
| Polyol G | 15 g Addukt I | 8,35 | 215 | 1 |
| Polyol G | 20 g Addukt I | 9,32 | 267 | 2 |
| Polyol G | 20 g Addukt II | 7,32 | 223,3 | 1 |
| Polyol G | 25 g Addukt II | 8,78 | 262,4 | 2 |
| Polyol G | 30 g Addukt IV | 3,69 | 218,8 | 1 |

**0 095 116**

Zusammenfassung von Beispiel 5

Das Beispiel zeigt, daß Addukt I, das den niedrigsten Propoxylierungsgrad aufweist, mit dem den höchsten endständigen Ethylenoxid-Anteil aufweisenden Polyether A Gemische mit einem höheren Anteil an freiem Ethylenglykol ergibt als mit Polyol F, das einen erniedrigten Anteil an endständigen Oxyethylen-Einheiten aufweist und gar als mit Polyol G, das in der Reihe der Polyole A, F, G den niedrigsten endständigen Oxyethylengruppen-Gehalt aufweist.

Ähnlich abgestuftes Verhalten zeigt auch Addukt II, das einen höheren Propoxylierungsgrad als Addukt I aufweist.

Die nicht erfindungsgemäßen Addukte III und IV können zwar in größerer Menge als Addukt II und insbesondere Addukt I den Polyethern beigemischt werden, ohne daß es zur Phasentrennung kommt. Wie aus der Tabelle 9 zu ersehen ist, ist dabei der anteilig mit homogen gelöste Anteil an Ethylenglykol im erfindungsgemäßen Sinne unerwünscht gering im Verhältnis zum Anteil an höher propoxylierten Derivaten des Ethylenglykols. Diese höher propoxylierten Derivate des Ethylenglykols sind hinsichtlich ihrer Wirkung auf wichtige Eigenschaften der Polyurethane unerwünscht.

Beispiel 6

Anwendungsbeispiel (PU-Integralschaumstoff)

Rezeptur

Polyolkomponente : 70 Teile Polyol A

x      Teile Addukt
3      Teile « Deta » (3,5-(Diethyl-1-methyl-2,4-(bzw. 2,6-) diamino-benzol-Gemisch)
0,3    Teile Dabco® (tert.-Amin-Katalysator Air-Products)
0,07   Teile UL-28 (Zinnkatalysator der Fa. Witco/USA)

Beispiel 6.1

Die unter Verwendung von x = 25 Teilen Addukt I hergestellte Polyolkomponente wurde unter Beachtung einer Kennzahl von 103 mit 117,4 Teilen Isocyanat A nach dem Reaction-Injection-Molding-(RIM)-Verfahren verarbeitet.

Beispiel 6.2

Die unter Verwendung von x = 30,5 Teilen Addukt II hergestellte Polyolkomponente wurde unter Beachtung einer Kennzahl von 103 mit 117,4 Teilen Isocyanat A nach dem RIM-Verfahren verarbeitet.

Beispiel 6.3

Die unter Verwendung von x = 35,9 Teilen Addukt III hergestellte Polyolkomponente wurde unter Beachtung einer Kennzahl von 103 mit 117,4 Teilen Isocyanat A nach dem RIM-Verfahren verarbeitet (nicht erfindungsgemäß).

Beispiel 6.4

Unter Verwendung von x = 42,0 Teilen Addukt IV hergestellte Polyolkomponente wurde unter Beachtung einer Kennzahl von 103 und 117,4 Teilen Isocyanat A nach dem RIM-Verfahren verarbeitet (nicht erfindungsgemäß).

Isocyanat A besteht aus einem durch Urethangruppen und Carbodiimidgruppen modifiziertem Phosgenierungsprodukt eines Anilin/Formaldehyd-Kondensats mit einem NCO-Gehalt von 26,2 Gew.-% NCO und Dichlormethan (Isocyanatkomponente 95,25 Teile, Dichlormethan 4,75 Teile).
Rohstofftemperaturen : 25 °C ; Formtemperatur : 50 °C.

(Siehe Tabelle Seite 22 f.)

21

Mechanische Daten (ermittelt an 20 × 20 × 0,4 cm dicken Platten)

| | Beispiel 6.1 | Beispiel 6.2 | Beispiel 6.3 (nicht erfindungsgemäß) | Beispiel 6.4 |
|---|---|---|---|---|
| Raumgewicht | 1095 | 1105 | 1070 | 1100 |
| Shore D | 65 | 64 | 63,5 | 63 |
| Sag-Test (mm Durchbiegung bei 121,1°C) | 10 | 11,9 | 16 | 24 |

Es zeigt sich, daß mit zunehmendem Anteil an Oxypropylen-Einheiten in den Addukten die Wärmebeständigkeit, wie sie mit dem Sag-Test bekannt wird, nachläßt.

**Patentansprüche**

1. Einphasig lagerstabiles, emulgatorfreies Polyolgemisch mit hoher Misch-OH-Zahl und hohem Ethylenglykolgehalt, aus
A) höhermolekularen Polyoxyalkylenpolyolen,
B) einem Gemisch niedermolekularer Diole
und gegebenenfalls
C) weiteren, an sich bekannten Verbindungen mit gegenüber Isocyanaten reaktionsfähigen Wasserstoffatomen
und gegebenenfalls
D) weiteren Hilfs- und Zusatzstoffen der Polyurethanherstellung,
dadurch gekennzeichnet, daß die Komponente A) aus einem Polyalkylenoxidpolyol der OH-Zahl 20 bis 210, das mindestens 5 Gew.-% und weniger als 80 Gew.-%, überwiegend oder ausschließlich endständige, Ethylenoxidblöcke besitzt und die Komponente B) aus einem niedermolekularem Diolgemisch der OH-Zahl 1 200 bis 1 650 in Form eines Umsetzungsproduktes von 1 mol Ethylenglykol mit 0,1 bis 0,5 mol Propylenoxid und die Komponente C) aus 2- und/oder 3-wertigen Verbindungen mit reaktionsfähigen Wasserstoffatomen und einer Molmasse von 32 bis 399 bestehen,
wobei im Polyolgemisch auf
100 Teile A)
0,1-30 Teile B)
und gegebenenfalls bis 5 Teile C) kommen.
2. Polyolgemisch nach Anspruch 1, dadurch gekennzeichnet, daß die Komponente A) aus Polyoxyalkylenpolyolen besteht, die 10 bis 50 Gew.-% überwiegend oder ausschließlich endständige, Oxyethylenblöcke besitzen.
3. Polyolgemisch nach Ansprüchen 1 und 2, dadurch gekennzeichnet, daß die Komponente A) aus Polyoxypropylenpolyolen mit 12,5 bis 27,5 Gew.-%, überwiegend oder ausschließlich endständigen, Oxyethylenblöcken besteht.
4. Polyolgemisch nach Ansprüchen 1 bis 3, dadurch gekennzeichnet, daß die Komponente A) aus 2- bis 4-wertigen Polyoxyalkylenpolyolen mit einer OH-Zahl von 20 bis 60 besteht.
5. Polyolgemisch gemäß Ansprüchen 1 bis 4, dadurch gekennzeichnet, daß die Komponente B) aus einem Umsetzungsprodukt von 1 Mol Ethylenglykol mit 0,2 bis 0,4 Mol Propylenoxid besteht.
6. Polyolgemisch gemäß Ansprüchen 1 bis 5, dadurch gekennzeichnet, daß die Komponente B) aus einem Gemisch aus
a) mindestens 40 Gew.-% Ethylenglykol,
b) 20-50 Gew.-% monopropoxyliertem Ethylenglykol,
c) 0-10 Gew.-% 2-fach propoxyliertem Ethylenglykol,
d) 0-2 Gew.-% höher propoxyliertem Ethylenglykol,
besteht, wobei die Summe a) + b) + c) + d) = 100 ist.
7. Polyolgemisch nach Ansprüchen 1 bis 6, dadurch gekennzeichnet, daß gegebenenfalls die Komponente C) aus 2-wertigen, aliphatischen Diolen mit 2-8 C-Atomen und/oder aromatischen, kernalkylierten Diaminen besteht.
8. Polyolgemisch nach Ansprüchen 1 bis 7, dadurch gekennzeichnet, daß die Komponente C) aus Butandiol-1,4 besteht.
9. Verwendung der einphasig lagerstabilen, emulgatorfreien Polyolgemische gemäß Ansprüchen 1 bis 8 als Reaktionskomponente bei der Herstellung von Polyurethankunststoffen.

**Claims**

1. Homogeneously storage-stable, emulsifier-free polyol mixture having a high mixed OH-number and a high ethylene glycol content of
   A) relatively high molecular weight polyoxyalkylene polyols,
   B) a mixture of low molecular weight diols and, optionally,
   C) other compounds known *per se* containing isocyanate-reactive hydrogen atoms and, optionally,
   D) other auxiliaries and additives used in the production of polyurethanes,
characterised in that component A) consists of a polyalkylene oxide polyol having an OH-number of 20 to 210, which has at least 5 % by weight and less than 80 % by weight of predominantly or exclusively terminal ethylene oxide blocks and component B) consists of a low molecular weight diol mixture having an OH-number of 1 200 to 1 650 in the form of a reaction product of 1 mole of ethylene glycol with 0.1 to 0.5 mole of propylene oxide and component C) consists of 2- and/or 3-functional compounds containing reactive hydrogen atoms and having a molecular weight of 32 to 399, the polyol mixture containing 0.1-30 parts of B) and, optionally, up to 5 parts of C) to 100 parts of A).

2. Polyol mixture according to Claim 1, characterised in that component A) consists of polyoxyalkylene polyols having 10 to 50 % by weight of predominantly or exclusively terminal oxyethylene blocks.

3. Polyol mixture according to Claims 1 and 2, characterised in that component A) consists of polyoxypropylene polyols containing 12.5 to 27.5 % by weight of predominantly or exclusively terminal oxyethylene blocks.

4. Polyol mixture according to Claims 1 to 3, characterised in that component A) consists of 2- to 4-functional polyoxyalkylene polyols having an OH-number of 20 to 60.

5. Polyol mixture according to Claims 1 to 4, characterised in that component B) consists of a reaction product of 1 mole of ethylene glycol with 0.2 to 0.4 mole of propylene oxide.

6. Polyol mixture according to Claims 1 to 5, characterised in that component B) consists of a mixture of
   a) at least 40 % by weight of ethylene glycol,
   b) 20-50 % by weight of monopropoxylated ethylene glycol,
   c) 0-10 % by weight of di-propoxylated ethylene glycol,
   d) 0-2 % by weight of more highly propoxylated ethylene glycol,
the sum of a) + b) + c) + d) being 100.

7. Polyol mixture according to Claims 1 to 6, characterised in that optionally component C) consists of difunctional aliphatic diols containing 2-8 C atoms and/or aromatic nucleus-alkylated diamines.

8. Polyol mixture according to Claims 1 to 7, characterised in that component C) consists of 1,4-butanediol.

9. Use of the homogeneously storage-stable emulsifier-free polyol mixtures according to Claims 1 to 8 as reaction component in the production of polyurethane plastics.

**Revendications**

1. Mélange sans émulsifiant, stable au magasinage, en une seule phase, de polyols ayant un indice élevé de OH de mélange et une teneur élevée en éthylèneglycol, constitué par :
   A) des polyoxyalkylènepolyols à poids moléculaire élevé,
   B) un mélange de diols à bas poids moléculaire, et éventuellement,
   C) d'autres composés, connus en eux-mêmes, ayant des atomes d'hydrogène pouvant réagir avec les isocyanates,
et éventuellement,
   D) d'autres adjuvants et additifs pour la préparation des polyuréthannes, caractérisé en ce que : le composant A) consiste en un polyoxyalkylènepolyol ayant un indice de OH de 20 à 210, qui possède au moins 5 % en poids et moins de 80 % en poids de séquences oxyde d'éthylène se trouvant surtout ou exclusivement en position terminale, et le composant B) consiste en un mélange de diols à bas poids moléculaire, ayant un indice de OH de 1 200 à 1 650, sous forme d'un produit de réaction de 1 mole d'éthylèneglycol avec 0,1 à 0,5 mole d'oxyde de propylène et le composant C) consiste en des composés divalents ou trivalents comportant des atomes d'hydrogène réactifs ayant une masse molaire de 32 à 399, et, dans le mélange des polyols, il y a pour 100 parties de A) 0,1 à 30 parties de B) et éventuellement jusqu'à 5 parties de C).

2. Mélange de polyols suivant la revendication 1, caractérisé en ce que le composant A) consiste en des polyoxyalkylènepolyols et comporte 10 à 50 % en poids de séquences oxyéthylène présentes surtout ou exclusivement en position terminale.

3. Mélange de polyols selon les revendications 1 et 2, caractérisé en ce que le composant A) consiste en des polyoxypropylènepolyols comportant 12,5 à 27,5 % en poids de séquences oxyéthylène se trouvant surtout ou exclusivement en position terminale.

4. Mélange de polyols selon les revendications 1 à 3, caractérisé en ce que le composant A) consiste en des polyoxyalkylènepolyols divalents à tétravalents ayant un indice de OH de 20 à 60.

5. Mélange de polyols selon les revendications 1 à 4, caractérisé en ce que le composant B) consiste en un produit de réaction de 1 mole d'éthylèneglycol avec 0,2 à 0,4 mole d'oxyde de propylène.

6. Mélange de polyols selon les revendications 1 à 5, caractérisé en ce que le composant B) consiste en un mélange de :

a) au moins 40 % en poids d'éthylèneglycol,

b) 20 à 50 % en poids d'éthylèneglycol monopropoxylé,

c) 0 à 10 % en poids d'éthylèneglycol 2 fois propoxylé,

d) 0 à 2 % en poids d'éthylèneglycol plus fortement propoxylé,

la somme a) + b) + c) + d) valant 100.

7. Mélange le polyols selon les revendications 1 à 6, caractérisé en ce que le composant C) consiste en des diols aliphatiques divalents comportant 2 à 8 atomes de carbone et/ou en des diamines aromatiques alkylées sur les noyaux.

8. Mélange de polyols selon les revendications 1 à 7, caractérisé en ce que le composant C) consiste en du butanediol-1,4 ;

9. Utilisation des mélanges de polyols sans émulsifiant, en une phase, stables au magasinage, selon les revendications 1 à 8, comme composants à faire réagir dans la préparation de matières plastiques ou type polyuréthanne.